# EUROPEAN PATENT SPECIFICATION

(11) **EP 0 420 178 B1**
(45) Date of publication and mention of the grant of the patent: **13.07.1994**
(21) Application number: 90118457.2
(22) Date of filing: 26.09.1990
(51) Int. Cl.: G03G 15/00

(54) **Manuscript-reading apparatus**
Gerät zum Lesen von Vorlagen
Appareil de lecture d'originaux

(30) Priority: 29.09.1989 JP 256215/89
(43) Date of publication of application: 03.04.1991
(73) Proprietor: MITA INDUSTRIAL CO., LTD., Osaka 540 (JP)
(72) Inventor: Nakajima, Yoshihiro, Osaka-shi, Osaka 536 (JP); Takada, Akihiro, Neyagawa-shi, Osaka 572 (JP); Onishi, Kunihiro, Higashiyodogawa-ku, Osaka-shi, Osaka 533 (JP)
(74) Representative: Beetz & Partner Patentanwälte

(56) References cited:
- EP-A- 0 315 427
- GB-A- 2 065 610

## Description

The present invention relates to a manuscript-reading apparatus of the kind referred to in the preamble portion of patent claim 1. Such an apparatus is known from EP-A-0 315 427.

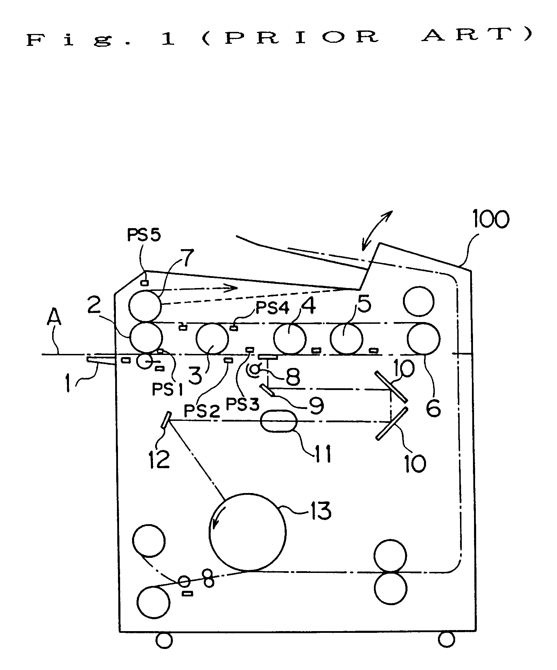

When operating a conventional manuscript-reading apparatus such as an image reading apparatus of a copying apparatus, as shown in Fig. 1 (by a one-dot chained line A), as soon as an operator places a manuscript on a guide plate 1 and inserts it into the copying apparatus, a plurality of paper-feeding rollers 2 through 7 sequentially carry the manuscript forward. A lamp 8 for irradiating the manuscript is disposed right below the space between the paper-feeding rollers 3 and 4. Reflective mirrors 9 and 10 for leading image-light reflected from the manuscript to an image-forming lens 11 are installed below the lamp 8. The image-forming lens 11 focuses the light on a photosensitive drum 13 via a reflection mirror 12 to perform the light-exposure process.

A plurality of photosensors PS1, PS2, PS3, ... are disposed on the manuscript conveying path. These photosensors detect the manuscript conveying condition to detect jammed paper. For example, during the time interval, while a manuscript is in the conveying path, if the photosensor PS2 still remains OFF a certain time (T) after turning the PS1, ON, it is identified that the manuscript jams between the photosensors PS1 and PS2.

When the inserted paper jams, the copying operator usually opens the paper-conveying means 100 of the manuscript reading apparatus to eliminate the jammed paper. According to any conventional system, a sensor (not shown) detects that this paper-conveying means 100 is opened by the operator, and the manuscript-reading apparatus ends the inhibition of the copy operation only when the conveying means 100 is opened.

Nevertheless, if the paper jams at a position close to the inlet port, the jammed paper can be pulled out of the copying apparatus by the operator without opening the conveying means 100.

However, even when the jammed paper can be pulled out of the copying apparatus, unless the operator once opens the above conveying means 100 of the manuscript-reading apparatus, the image reading operation cannot be resumed at all.

EP-A-0 315 427 discloses a manuscript reading apparatus incorporating conveying means for conveying a manuscript and an optical system which is installed on a manuscript conveying path to generate reflective light by irradiating light against a conveyed manuscript, comprising: a pair of sensors which are respectively provided on said manuscript conveying path to detect the presence of the conveyed manuscript, and are arranged to turn ON when the manuscript paper is detected and remain turned OFF when said manuscript paper is not detected, and an identifying means which receives signals from said pair of sensors, wherein said identifying means identifies i) the presence of a jammed manuscript when the downstream side sensor still remains turned OFF after the upstream side sensor turns ON.

It is the object of the present invention is to solve the technical problems inherent to conventional manuscript reading apparatuses and is to permit the continuation of copying if the jammed manuscript can be pulled out of the copying apparatus by the operator without having to open the conveying means of the manuscript reading apparatus.

This object is accomplished with a manuscript-reading apparatus as claimed in claim 1.

Dependent claims are directed on features of preferred embodiments of the invention as claimed in claim 1.

According to the manuscript reading apparatus of the invention, a manuscript is conveyed by a conveying means, and then an optical system reads the image of the conveyed manuscript. An identifying means receives signals from a pair of sensors disposed on the manuscript conveying path. If the downstream side sensor still remains OFF, even when the upstream side sensor turns ON, this identifying means identifies the presence of jammed paper, and finally identifies that the jammed paper is eliminated from the conveying path when both sensors turn themselves OFF, without having to open said conveying means.

Therefore, even when a jammed paper is present, in particular, even when the copying operator pulls out the jammed manuscript from the inlet port without opening the conveying means, the manuscript reading apparatus can correctly identify the state of release from the jammed paper.

### BRIEF DESCRIPTION OF THE DRAWINGS

Fig. 1 is a schematic sectional view of a conventional manuscript reading apparatus;
Fig. 2 is a perspective view of a copying apparatus incorporating the manuscript rending apparatus according to an embodiment of the invention;
Fig. 3 is the sectional view of the manuscript reading apparatus shown in Fig. 2;
Fig. 4 is a simplified block diagram of the manuscript reading apparatus shown in Fig. 2; and
Fig. 5 is a flowchart showing the functional operation of the manuscript reading apparatus of the invention.

Referring now to the accompanying drawings, an embodiment of the manuscript reading apparatus of the invention is described below.

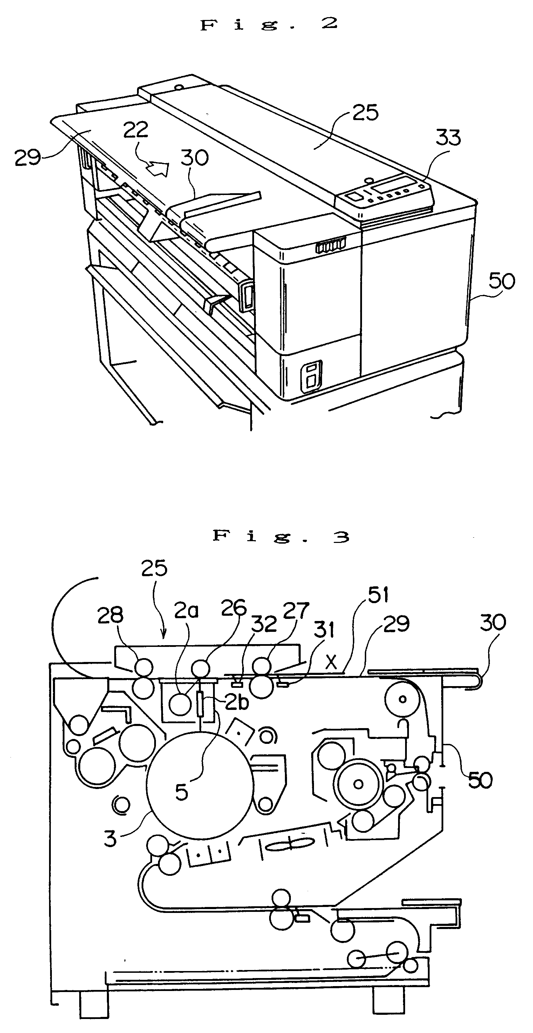

Fig. 2 is a perspective view of a copying apparatus incorporating the manuscript reading apparatus according to an embodiment of the invention. In Fig. 2, the manuscript reading apparatus incorporating a manuscript conveying means 25 is installed to the top surface of the copying apparatus 50. A control panel 33 equipped with a variety of keys such as the print activating key and numerical keys is installed to an end of this conveying means 25. A manuscript guide plate 29 is installed to the position adjoining this conveying means 25. A manuscript subject to copying operation is placed on the manuscript guide plate 29. Cursor 30 detects the size of the manuscript on the guide plate 29. An LED 22 advises the copying operator that the copying operation can normally be performed.

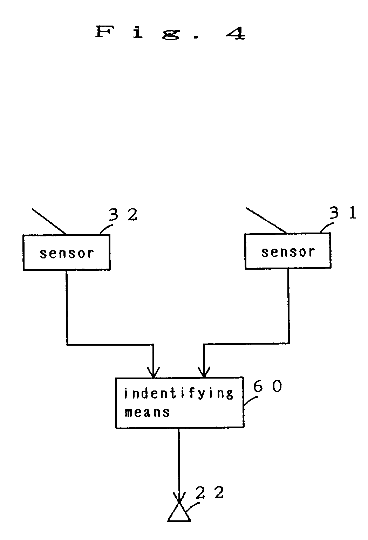

Fig. 3 is the schematic sectional view of the manuscript reading apparatus according in an embodiment of the invention. Drive rollers 27 and 28 are respectively installed to the main body 50 and manuscript conveying means 25 to allow a manuscript 51 to pass through these components.

A manuscript holding roller 26 is installed between these drive rollers 27 and 28 to correctly hold the manuscript in position. These rollers 26, 27, and 28, are disengaged from the driving force while no copying operation is performed so that these rollers can rotate in inverse directions. The manuscript guide plate 29 is installed immediately before the front drive roller 27 (the front corresponds to the upper-right side of the apparatus shown in Fig. 3 and also to the side where the operator controls the copying operation).

A sensor 31 like a limit switch or a photosensor for example is installed immediately before the drive roller 27 to detect whether the manuscript 51 is at the position corresponding to this sensor 31, or not. The other sensor 32 is installed between the drive roller 27 and the manuscript holding roller 26 to detect whether the manuscript 51 is at the position corresponding to this sensor 32, or not.

An optical system 5 is disposed right below the manuscript holding roller 26. The optical system 5 comprises a lamp 2c which irradiates light in the direction of the manuscript holding roller 26 , and an image-forming lens 2b which focuses light image reflected from the manuscript 51 on a photosensitive drum 3.

Fig. 4 is the simplified block diagram designating operations of the sensors 31 and 32. An identifying means 60 shown in Fig. 4 receives signals from these sensors 31 and 32. Even when the upstream side sensor 31 turns ON, if the downstream side sensor 32 still remains OFF, this identifying means 60 then identifies the presence of a jammed paper. Only when both sensors 31 and 32 have turned themselves OFF, this identifying means 60 identifies that the jammed paper is already eliminated. Normally, this identifying means 60 is embodied by using a microcomputer.

The LED 22 advises the copying operator of the presence of a jammed paper by lighting up a red light. It advises the operator that the jammed paper is eliminated by lighting up a blue light (provided that no other failures are present).

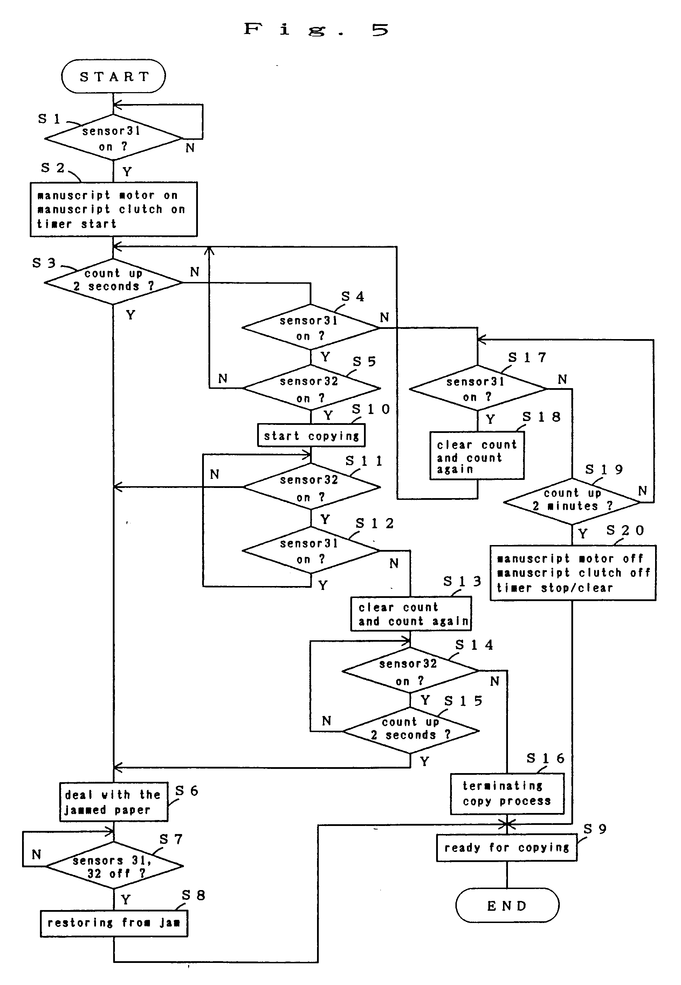

Next the, operation of the manuscript reading apparatus embodied by the invention is described. Fig. 5 shows a flowchart of the operational sequence.

First, the copying operator places the manuscript 51 on the guide plate 29 and then inserts it into conveying means 25. This activates step S1 to cause the sensor 31 to turn ON itself. As a result, step S2 is entered, in which, the drive motor and the clutch for carrying the manuscript are activated to rotate the drive rollers 27 and 28. Simultaneously, a timer starts to count time for detecting presence of the jammed paper. Next, steps S3 and S4 are entered, in which the timer has not yet counted up 2 seconds, and thus, the sensor 31 still remains ON. Next, step S5 is entered, in which identifying means 60 identifies whether the sensor 32 is ON, or not. Since the sensor 32 remains OFF before the manuscript arrives at the position corresponding to the sensor 32, step S3 is again entered, in which identifying means 60 checks whether the timer has already counted up 2 seconds, or not. When the manuscript 51 is normally conveyed, these sensors 31 and 32 turn ON themselves before 2 seconds are past. On the other hand, if the paper jams up, the sensor 32 remains OFF to cause the timer to count up to 2 seconds in steps S4, S5, and S3.

When jam occurs , identifying means 60 causes the LED 22 to light up the red light. The operator visually identifies that a paper is jammed and then manually pulls out the manuscript 51 from the inlet port without' opening up conveying means 25 at all, and then eliminates the jammed paper in step S6.

On the other hand, identifying means 60 constantly watches those sensors 31 and 32. Only after confirming that those sensors 31 and 32 are OFF and the manuscript 51 has been drawn out of the apparatus in step S7, normal condition without presence of jammed paper is restored in step S8. As a result, the LED 22 lights up the blue light in step S9 to allow the operator to normally resume the copying operation.

When the manuscript 51 causes the sensor 32 to turn ON itself in step S5, step S10 is activated so that the copying operation can be resumed. The optical system 5 irradiates light and starts to implement light exposure. Even when the sensor 31 turns ON a certain while later, if the sensor 32 still remains OFF in steps S11 and S12, it indicates that the manuscript 51 jams up itself. Since then, the apparatus follows up those sequential processes mentioned above(steps S6, ...).

When the manuscript 51 is normally conveyed in step S12, the sensor 31 turns OFF itself in step S12. Next, step S13 in entered to again reset the timer. When the sensor 32 turns OFF in step S14, then step S16 is entered to allow the copying apparatus to enter into terminating process taking it that the copying operation is completed. Next, step S19 is entered to allow the copying apparatus to start a copying operation. Nevertheless, even after 2 seconds are past, if the sensor 32 does not turn OFF in step S15, identifying means 60 takes it that the jammed paper is present, and then executes those sequential processes to dispose of the jammed paper as mentioned above.

In the event that the copying operator finds that the manuscript 51 is obliquely inserted into the inlet port before those sensors turn ON themselves and then he pulls out the manuscript 51 from the inlet port, the sensor 31 turns OFF in step S4 without causing the sensor 32 to turn ON itself before the timer counts up 2 seconds. And after pulling out the manuscript 51, if the sensor 31 turns from ON to OFF in steps S17, S19, and S17 before the timer counts up 2 minutes, identifying means 60 takes it that the operator has again inserted the manuscript 51 into the inlet port, and then step S18 is entered to reset the timer. Then, the operation mode returns to step S3.

While step S19 is underway in which the sensor 31 still remains OFF 2 minutes after pulling out the manuscript 51, then identifying means 60 stops operation of the motor, clutch, and the timer, in step S20. Finally, step S9 is entered, in which the copying enable condition is set.

The manuscript reading apparatus embodied by the invention is not only applicable to any copying apparatus available today, but it is also usefully applicable to other image forming apparatuses like facsimiles or the like as well. Not only a pair of sensors, but more than two of sensors may also be used for embodying the invention.

As is clear from the above description, the manuscript reading apparatus embodied by the invention securely identifies not only the presence of jammed paper but also the state of the release from the presence of jammed paper by effectively applying the manuscript detecting signals at least from a pair of sensors, without opening the manuscript conveying means. Therefore, the manuscript reading apparatus can effectively deal with the jammed paper in the event that conveying means cannot be opened at all.

It is further understood by those skilled in the art that the foregoing description is merely a preferred embodiment and various changes and modifications may also be made without departing from the scope of the invention.

## Claims

1. A manuscript-reading apparatus incorporating conveying means (25) for conveying a manuscript and an optical system (5) which is installed on a manuscript conveying path to generate reflective light by irradiating light against a conveyed manuscript, comprising:
an upstream and a downstream sensor (31, 32) which are respectively provided on said manuscript conveying path to detect the presence of the conveyed manuscript and are arranged to turn ON when the manuscript paper is detected and remain turned OFF when said manuscript paper is not detected, and
an identifying means (60) which receives signals from said pair of sensors, wherein said identifying means is arranged to identify
i) the presence of a jammed manuscript when the downstream side sensor still remains turned OFF a first predetermined time after the upstream side sensor turns ON,
**characterized** in that
said identifying means (60) is further arranged to
ii) subsequently identify that said jammed manuscript is released without opening said conveying means, when both of said sensors have jointly turned themselves OFF.

2. The manuscript-reading apparatus according to claim 1, wherein said sensors (31, 32) are photosensors.

3. The manuscript-reading apparatus according to claim 1, wherein said sensors (31, 32) are composed of limit switches.

4. The manuscript-reading apparatus according to claim 1, wherein said identifying means is arranged to identify the presence of the jammed manuscript when said downstream sensor continues to remain ON for a second predetermined time after said upstream sensor turns OFF.

5. A manuscript-reading apparatus in accordance with claim 4, wherein said identifying means is further arranged to identify removal of a manuscript from said manuscript conveying path when said upstream sensor turns OFF within a third predetermined time after turning ON without said downstream sensor turning ON, thereby identifying the absence of a jammed manuscript.

6. A manuscript-reading apparatus in accordance with claim 4, wherein said upstream and downstream sensors are photosensors.

7. A manuscript-reading apparatus in accordance with claim 4, wherein said upstream and downstream sensors are comprised of limit switches.

8. A manuscript-reading apparatus in accordance with claim 4, further including
driving means for driving said manuscript conveying means and
timing means for counting the passage of time,
wherein said timing means and said driving means are actuated when said upstream sensor turns ON.

9. A manuscript-reading apparatus in accordance with claim 5, wherein
said identifying means is further arranged to identify a starting of a manuscript reading operation when said upstream sensor turns ON within a fourth predetermined time from turning OFF, and is arranged to
identify a ready state of the manuscript reading apparatus when said upstream sensor continues to remain OFF even after said fourth predetermined time lapses after said upstream sensor turns OFF.

## Patentansprüche

1. Vorlagenlesevorrichtung mit einer Fördereinrichtung (25) zum Befördern einer Vorlage und einem optischen System (5), das auf einem Vorlagenförderweg montiert ist, um durch Bestrahlen einer beförderten Vorlage mit Licht reflektiertes Licht zu erzeugen, mit
einem stromaufseitigen und einem stromabseitigen Sensor (31, 32), die jeweils zum Erfassen des Vorhandenseins der beförderten Vorlage auf dem Vorlagenförderweg vorgesehen und derart beschaffen sind, daß sie eingeschaltet werden, wenn das Vorlagenblatt erfaßt wird und ausgeschaltet bleiben, wenn kein Vorlagenblatt erfaßt wird, und
einer Erkennungseinrichtung (60), die Signale von den beiden Sensoren empfängt, wobei die Erkennungseinrichtung derart beschaffen ist, daß sie
i.) das Vorhandensein einer steckengebliebenen Vorlage erkennt, wenn der stromabseitige Sensor nach Ablauf einer ersten vorbestimmten Zeitspanne nach dem Einschalten des stromaufseitigen Sensors weiterhin ausgeschaltet bleibt,
**dadurch gekennzeichnet, daß**
die Erkennungseinrichtung (60) ferner derart beschaffen ist, daß sie
ii.) anschließend erkennt, daß die steckengebliebene Vorlage ohne Öffnen der Fördereinrichtung freigegeben wurde, wenn sich beide Sensoren gemeinsam ausgeschaltet haben.

2. Vorlagenlesevorrichtung nach Anspruch 1, in der die Sensoren (31, 32) Photosensoren sind.

3. Vorlagenlesevorrichtung nach Anspruch 1, in der die Sensoren (31, 32) aus Grenztastern bestehen.

4. Vorlagenlesevorrichtung nach Anspruch 1, in der die Erkennungseinrichtung derart beschaffen ist, daß sie das Vorhandensein einer steckengebliebenen Vorlage erkennt, wenn der stromabseitige Sensor für eine zweite vorbestimmte Zeitspanne nach dem Ausschalten des stromaufseitigen Sensors weiter eingeschaltet bleibt.

5. Vorlagenlesevorrichtung nach Anspruch 4, in der die Erkennungseinrichtung derart beschaffen ist, daß sie das Entfernen einer Vorlage aus dem Vorlagenförderweg erkennt, wenn der stromaufseitige Sensor innerhalb einer dritten vorbestimmten Zeitspanne nach dem Einschalten ausgeschaltet wird, ohne daß der stromabseitige Sensor eingeschaltet wird, und dadurch die Abwesenheit einer steckengebliebenen Vorlage erkennt.

6. Vorlagenlesevorrichtung nach Anspruch 4, in der der stromaufseitige und der stromabseitige Sensor Photosensoren sind.

7. Vorlagenlesevorrichtung nach Anspruch 4, in der der stromaufseitige und der stromabseitige Sensor aus Grenztastern bestehen.

8. Vorlagenlesevorrichtung nach Anspruch 4, die ferner folgendes umfaßt:
eine Antriebseinrichtung zum Antreiben der Vorlagenfördereinrichtung und eine Zeitgebereinrichtung zum Zählen des Verstreichens der Zeit,
wobei die Zeitgebereinrichtung und die Antriebseinrichtung betätigt werden, wenn der stromaufseitige Sensor eingeschaltet wird.

9. Vorlagenlesevorrichtung nach Anspruch 5, in der
die Erkennungseinrichtung ferner derart beschaffen ist, daß sie den Beginn des Vorlagenlesevorgangs erkennt, wenn der stromaufseitige Sensor innerhalb einer vierten vorbestimmten Zeitspanne nach dem Ausschalten eingeschaltet wird, und derart beschaffen ist,
Daß sie einen Bereitschaftsstatus der Vorlagenlesevorrichtung erkennt, wenn der stromaufseitige Sensor selbst nach dem Verstreichen der vierten vorbestimmten Zeitspanne nach dem Ausschalten des stromaufseitigen Sensors weiterhin ausgeschaltet bleibt.

## Revendications

1. Un appareil de lecture d'original comportant des moyens de transport (25) pour transporter un original et un système optique (5) qui est installé sur un chemin de transport d'original pour produire de la lumière réfléchie, en projetant de la lumière sur un original transporté, comprenant :
un capteur amont et un capteur aval (31, 32) qui sont respectivement placés sur le chemin de transport d'original pour détecter la présence de l'original transporté, et qui sont conçus de façon à être activés lorsque la feuille de papier de l'original est détectée, et à rester désactivés lorsque la feuille de papier de l'original n'est pas détectée, et
des moyens d'identification (60) qui reçoivent des signaux provenant de la paire de capteurs, ces moyens d'identification étant conçus pour identifier :
i) la présence d'un original bloqué lorsque le capteur du côté aval reste toujours désactivé au bout d'un intervalle de temps prédéterminé après l'activation du capteur du côté amont,
**caractérisé** en ce que
les moyens d'identification (60) sont en outre conçus pour
ii) identifier ensuite le fait que l'original bloqué est retiré sans ouvrir les moyens de transport, lorsque les deux capteurs sont passés conjointement à l'état désactivé.

2. L'appareil de lecture d'original selon la revendication 1, dans lequel les capteurs (31, 32) sont des photocapteurs.

3. L'appareil de lecture d'original selon la revendication 1, dans lequel les capteurs (31, 32) sont constitués par des interrupteurs de fin de course.

4. L'appareil de lecture d'original selon la revendication 1, dans lequel les moyens d' identification sont conçus pour identifier la présence de l'original bloqué lorsque le capteur aval continue à rester activé pendant un second intervalle de temps prédéterminé, après la désactivation du capteur amont.

5. Un appareil de lecture d'original selon la revendication 4, dans lequel les moyens d'identification sont en outre conçus pour identifier le fait qu'un original est retiré du chemin de transport d'original lorsque le capteur amont est désactivé pendant un troisième intervalle de temps prédéterminé après avoir été activé, sans que le capteur aval ne soit activé, pour identifier ainsi l'absence d'un original bloqué.

6. Un appareil de lecture d'original selon la revendication 4, dans lequel les capteurs amont et aval sont des photocapteurs.

7. Un appareil de lecture d'original selon la revendication 4, dans lequel les capteurs amont et aval sont constitués par des interrupteurs de fin de course.

8. Un appareil de lecture d'original selon la revendication 4, comprenant en outre
des moyens d' entraînement pour entraîner les moyens de transport d'original, et
des moyens de temporisation pour compter le temps écoulé, dans lequel les moyens de temporisation et les moyens d' entraînement sont actionnés lorsque le capteur amont est activé.

9. Un appareil de lecture d'original selon la revendication 5, dans lequel
les moyens d' identification sont en outre conçus pour identifier le début d'une opération de lecture d'original lorsque le capteur amont est activé pendant un quatrième intervalle de temps prédéterminé, après avoir été désactivé, et sont conçus pour
identifier un état prêt de l'appareil de lecture d'original lorsque le capteur amont continue à rester désactivé même après l' écoulement du quatrième intervalle de temps prédéterminé à la suite de la désactivation du capteur amont.
